# EUROPEAN PATENT APPLICATION

(11) **EP 2 192 516 A1**
(43) Date of publication of application: **02.06.2010**
(21) Application number: 09165480.6
(22) Date of filing: 15.07.2009
(51) Int. Cl.: G06F 21/00

(54) **Method for upgrading antivirus software and terminal and system thereof**

(30) Priority: 24.11.2008 CN 200810178152
(71) Applicant: Huawei Device Co., Ltd., Longgang District Shenzhen Guangdong 518129 (CN)
(72) Inventor: Zhang, Wanchun, 518129, Shenzhen Guangdong (CN)
(74) Representative: Körber, Martin Hans

(57) **Abstract**

A method for upgrading antivirus software and corresponding terminal and system thereof are provided. The method includes: reporting, by a first operating system connected to a terminal, a first device port of the terminal to a computer when the computer is started; running, by the computer, a second operating system of the port via the first device port; loading, by the second operation system, a driver of a network communication device or the terminal, and downloading, by the second operation system, an update file of the antivirus software from a remote virus database server via the network communication device, and adopting, by the first operating system of the terminal, the update file of the antivirus software to update the antivirus software. The beneficial effects of the present invention lie in that the latest antivirus software can be updated when the computer is started, thus ensuring the system security and antivirus efficiency.

## Description

### FIELD OF THE INVENTION

The present invention relates to the field of computer security, and more particularly to a method for upgrading antivirus software and corresponding terminal and system thereof.

### BACKGROUND OF THE INVENTION

With the popularization of Internet, computer viruses may cause incalculable loss to people. Therefore, for computer software, it is very important to upgrade antivirus software in real time. With the rapid development of wireless broadband networks, more and more users access the Internet via wireless networks by using a data card or mobile phone. The access to the Internet by using a data card or mobile phone has become a very convenient entertainment.

For personal computer (PC)-based or Internet-based antivirus software technologies, PC-resident antivirus client software is mainly upgraded according to an authorized serial number. The client software is installed on each authorized computer, the software may be upgraded via the Internet, and the virus database may also be upgraded via the Internet. During the process of implementing the present invention, the inventor found that in the existing technology, a virus may control the computer, rendering the antivirus software useless.

In the related art, technical solutions of booting antivirus software also exit, which are mainly accomplished by using a hard disk or a floppy disk. During the process of implementing the present invention, the inventor found that when a floppy disk is employed to boot antivirus software, the floppy disk is easily damaged, and has a small capacity; as the floppy disk/hard disk is readable and rewritable, viruses may easily reside therein; and the virus database for booting the antivirus software cannot be upgraded, or can only be upgraded after an operating system of the computer is started. In this case, a virus may easily control the computer, resulting in poor security.

### SUMMARY OF THE INVENTION

Accordingly, an embodiment of the present invention is directed to a method for upgrading antivirus software, so as to solve the problem in the art that antivirus software cannot be updated online when the antivirus software is booted.

An embodiment of the present invention is also directed to a terminal for upgrading antivirus software, so as to solve the problem in the art that antivirus software cannot be connected to a network via a network adapter and thus cannot be updated when the computer is booted by the terminal.

An embodiment of the present invention is further directed to a system for upgrading antivirus software, which is operable to implement the above method, so as to solve the problem in the art that antivirus software cannot be updated online when the antivirus software is booted.

In order to solve the above problem in the related art, a method for upgrading antivirus software is provided. The method includes: reporting, by a first operating system connected to a terminal, a first device port of the terminal to a computer when the computer is started, in which a second operating system is stored in a storage space corresponding to the first device port of the terminal; running, by the computer, the second operating system via the first device port; loading, by the second operating system, a driver of a network communication device of the computer or the terminal, and downloading, by the second operating system, an update file of the antivirus software from to a remote virus database server via the network communication device; and using, by the first operating system of the terminal, the update file of the antivirus software to update the antivirus software. Therefore, when the computer is booted by the terminal, the network communication device can be loaded for updating the antivirus software.

In order to solve the above problem in the related art, a terminal with antivirus software is provided. The terminal includes: a first operating system unit, operable to report a first device port of the terminal to a computer connected to the terminal when the computer is started; an antivirus software image file unit, operable to store antivirus software; and a second operating system file unit, operable to store a second operating system file for the computer to run a second operating system via the first device port. The second operating system is operable to load a driver of a network communication device of the computer or the terminal, and connect to a remote virus database server via the network communication device to download an update file of the antivirus software stored in the antivirus software image file unit. The first operating system unit is further operable to use the update file of the antivirus software to update the antivirus software. By using the terminal, the network connection of the computer can be achieved through a network adapter when the computer is booted by the terminal, thus updating the antivirus software.

In order to solve the above problem in the related art, a system for upgrading antivirus software is provided. The system includes a terminal and a computer. The terminal is as described above. The computer further includes an interface and a processor. The computer communicates with the terminal via the interface. The processor is operable to process data received and sent via the interface and run the second operating system. With the system, the antivirus software may be upgraded and updated when the computer is booted, thus ensuring the reliability of the antivirus software and improving the security of the computer. Moreover, the cost is low, as the existing computer and terminal only need to be modified slightly.

### BRIEF DESCRIPTION OF THE DRAWINGS

The accompanying drawings provide a further understanding of the invention, and are incorporated in and constitute a part of this specification. The drawings, as a constitutional part of the present invention, shall not be construed as limiting the present invention.

FIG. 1 is a flow chart of a method for upgrading antivirus software according to a first embodiment of the present invention;

FIG. 2 is a flow chart of a method for upgrading antivirus software when a computer is booted by a terminal according to a second embodiment of the present invention;

FIG. 3 is a flow chart of an upgrade and virus removal process performed by a USB-Modem installed with antivirus software when a computer normally operates according to a third embodiment of the present invention;

FIG. 4 is a flow chart of a method for upgrading antivirus software when a computer is booted by a terminal according to a fourth embodiment of the present invention;

FIG. 5 is a flow chart of a method for upgrading antivirus software when a computer is booted by a terminal according to a fifth embodiment of the present invention;

FIG. 6 is a schematic structural view of a terminal capable of upgrading antivirus software when booting; and

FIG. 7 is a schematic structural view of a system capable of upgrading antivirus software when booting.

### DETAILED DESCRIPTION OF THE EMBODIMENTS

In order to make the objectives, technical solutions, and advantages of the present invention comprehensible, the present invention is further described in detail below through embodiments with the accompanying drawings. The exemplary embodiments of the present invention and descriptions thereof are only intended to explain the present invention, instead of limiting the present invention.

Various embodiments of the present invention provide a method for upgrading antivirus software and corresponding terminal and system thereof. The present invention is described in detail below by reference to the accompanying drawings.

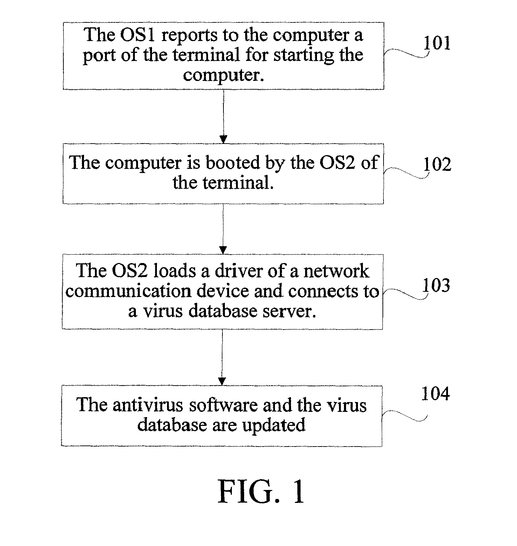

FIG. 1 is a flow chart of a method for upgrading antivirus software according to a first embodiment of the present invention. The terminal is stored with antivirus software and a virus database, and is inserted into a computer. After the computer is started, the method includes the following steps.

In Step 101, a first operating system (OS1) of the terminal reports to the computer a port of the terminal for starting the computer. For example, the terminal is a USB-Modem, a wireless communication data card, or a USB disk; and the reported port is a compact disk-read only memory (CD-ROM) port or a USB port.

In Step 102, the computer loads a second operating system (OS2) of the terminal, and is booted.

In Step 103, the OS2 loads a driver of a network communication device for the computer, so that the computer is connected to a virus database server via the network communication device. The driver of the network communication device is stored in the terminal. The network communication device may be a network adapter on the terminal, or a network adapter on the computer. A user may configure network connections by operating the computer.

In Step 104, the antivirus software and the virus database of the terminal are updated. The OS2 sends an update command to the OS1, or the OS1 itself initiates an update operation.

In an embodiment of the present invention, before Step 104, the method further includes a determination step. In this step, the OS2 compares a version of the antivirus software stored in the terminal with a software version of the virus database server to determine whether versions of the antivirus software and the virus database stored in the terminal are the latest or not. If yes, the antivirus software is operable to scan and remove viruses in the computer; otherwise, Step 104 is performed.

In a preferred embodiment, before Step 104, the method further includes a determination step. In this step, the OS1 compares a version of the antivirus software in the terminal with a software version of the virus database server to determine whether versions of the antivirus software and the virus database stored in the terminal are the latest or not. If yes, the antivirus software is operable to scan and remove viruses in the computer; otherwise, Step 104 is performed.

Through this embodiment, when the computer is booted by the terminal, the network communication device can be loaded for updating the antivirus software, so that the terminal downloads the latest antivirus software, thereby ensuring the system security and antivirus efficiency. Through this step, the use of the antivirus software by invalid users is limited, thus preventing software piracy.

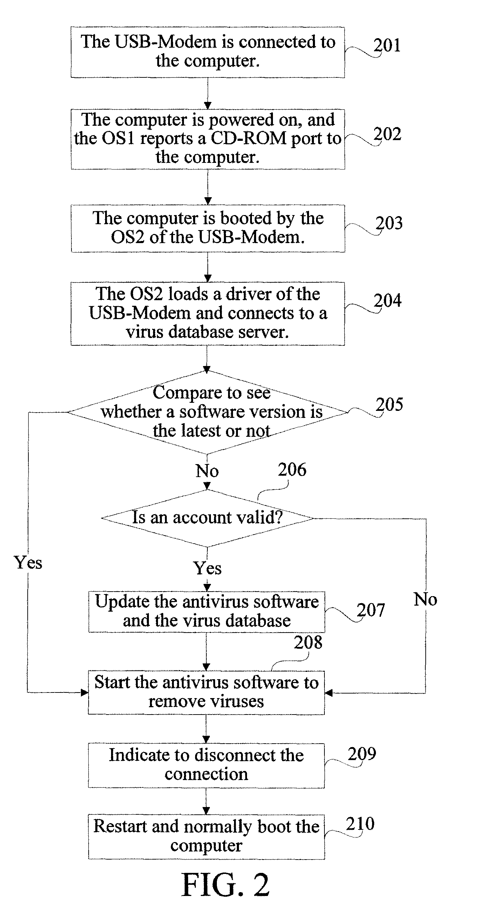

FIG. 2 is a flow chart of a method for upgrading antivirus software when a computer is booted by a terminal according to a second embodiment of the present invention. The terminal is a USB-Modem (modem with a USB interface). An embedded system of the USB-Modem is an OS1, which is responsible for communication between the USB-Modem and the computer. The USB-Modem further has a virtual CD-ROM image file, for example, an ISO, BIN, or NRG image file. The file contains an OS2 file, antivirus software, and a virus database. The OS2 is, for example, a DOS, Win-CE, or Linux system operable to boot the antivirus software.

In Step 201, the USB-Modem is connected to the computer.

In Step 202, after the computer is powered on, a basic input/output system (BIOS) of the computer detects peripheral devices. The USB-Modem is also powered on, and reports to the BIOS via the connected USB interface that a connected device is a CD-ROM port. Here, the communication between the USB-Modem and the computer is controlled by the OS1 of the USB-Modem. The communication data package is encapsulated in a USB protocol. Small computer systems interface (SCSI) protocol data is written into the communication data package. In addition, it is indicated that a CD-ROM device is connected via the USB port. At this time, a third operating system (OS3) for normally starting the computer, such as a Windows operating system or Linux operating system, is not started.

In Step 203, after the BIOS of the computer determines that the connected device is a CD-ROM device, a startup file in the CD-ROM device is searched according to a starting sequence set in the BIOS. Then, the OS1 of the USB-Modem unpacks and encapsulates the virtual CD-ROM image file in the USB-Modem, and notifies the BIOS that the CD-ROM device has the startup file. Afterward, the computer loads the OS2 in the virtual CD-ROM image file, and is booted by the OS2.

In Step 204, the computer is controlled by the OS2. The OS2 loads a driver of the USB-Modem, and configures the USB-Modem to connect to the Internet, so as to connect to a remote virus database server.

In Step 205, the OS2 of the computer detects whether versions of the antivirus software and the virus database in the virtual CD-ROM image file in the USB-Modem are consistent with versions in the virus database server or not, and if not, Step 206 is performed; otherwise, Step 208 is performed.

In Step 206, the validity of a user account is verified via a wireless network, and the antivirus software and the virus database are upgraded. If the verification is passed, Step 207 is performed; otherwise, Step 208 is performed.

In Step 207, the OS2 sends a command for updating the antivirus software and the virus database to the OS1 of the USB-Modem through an extended SCSI command, and the OS1 updates the antivirus software and the virus database in the virtual CD-ROM image file in the USB-Modem according to data obtained from the remote virus database server. Here, only the OS1 of the USB-Modem can perform a write operation on the virtual CD-ROM image file in the USB-Modem, which prevents the antivirus software and the OS2 of the USB-Modem from being damaged by computer viruses, thereby ensuring the system security and improving the antivirus capability. The extended SCSI command includes a command for updating the antivirus software and the virus database, a command for comparing antivirus software versions, a command for controlling the connection of the USB-Modem, and the like.

In Step 208, the antivirus software and the virus database are loaded into the OS2 that controls the computer, and the antivirus software is started to perform a virus removal operation.

In Step 209, after the virus removal operation is completed, it is indicated to disconnect the USB-Modem from the computer and restart the computer.

In Step 210, the computer is restarted, and the BIOS normally boots a hard disk of the computer.

Through this embodiment, the computer is connected to the remote virus database server via a network communication device of the USB-Modem. As the USB-Modem itself may carry a corresponding driver, the OS2 accurately loads the corresponding driver when required to, and a space for storing the driver is also reduced.

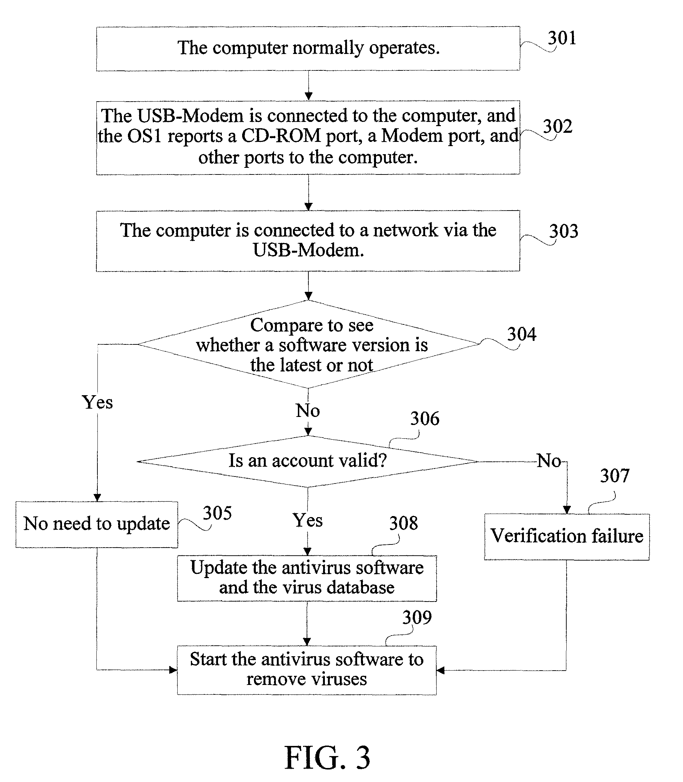

FIG. 3 is a flow chart of an upgrade and virus removal process performed by a USB-Modem (modem with a USB interface) installed with antivirus software when a computer normally operates according to a third embodiment of the present invention. An embedded system of the USB-Modem is an OS1, which is responsible for communication between the USB-Modem and the computer. The USB-Modem further has a virtual CD-ROM image file, for example, an ISO, BIN, or NRG image file. The file contains an OS2 file, antivirus software, and a virus database. The OS2 is, for example, a DOS, Win-CE, or Linux system operable to boot the antivirus software. The computer employs an OS3.

In Step 301, the computer normally operates, and is controlled by the OS3. The OS3 may be a Windows operating system.

In Step 302, the USB-Modem is connected to the computer, and the OS1 reports a CD-ROM port, a Modem port, and other ports to the computer.

In Step 303, the computer controls the USB-Modem to connect to a network via the identified Modem port, so as to connect to a remote virus database server.

In Step 304, the computer detects whether versions of the antivirus software and the virus database in the virtual CD-ROM image file are consistent with versions in the virus database server or not, and if not, Step 305 is performed; otherwise, Step 308 is performed.

In Step 305, the validity of a user account is verified, and if the verification is passed, Step 307 is performed; otherwise, Step 306 is performed.

In Step 306, it is indicated that the verification fails, and the antivirus software and the virus database cannot be upgraded, so that Step 308 is performed.

In Step 307, after the USB-Modem downloads update files of the antivirus software and the virus database, the computer sends an update command to the USB-Modem, and the OS1 of the USB-Modem updates the antivirus software and the virus database in the virtual CD-ROM image file in the USB-Modem.

In Step 308, the computer starts the antivirus software to remove viruses in the computer.

In an embodiment of the present invention, in Step 303, as the CD-ROM port is reported, the virtual CD-ROM image file in the USB-Modem contains an autorun executable file (autorun.exe), the executable file activates control software in the virtual CD-ROM image file to control the USB-Modem to perform operations such as automatic connection. Alternatively, the user clicks an identified CD-ROM to run the control software, so as to establish a network connection of the USB-Modem.

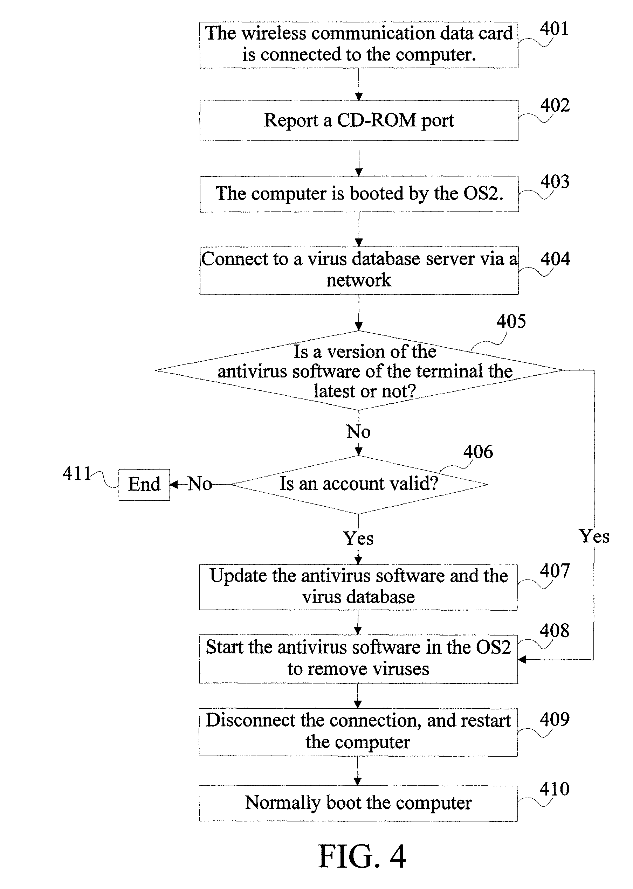

FIG. 4 is a flow chart of a method for upgrading antivirus software when a computer is booted by a terminal according to a fourth embodiment of the present invention. The terminal is a wireless communication data card. An embedded system of the wireless communication data card is an OS1, which is responsible for communication between the wireless communication data card and the computer. The wireless communication data card further has a virtual CD-ROM image file (for example, an ISO, BIN, or NRG image file). The file contains an OS2 file, antivirus software, and a virus database. The OS2 is, for example, a DOS, Win-CE, or Linux system operable to boot the antivirus software.

In Step 401, the wireless communication data card is connected to the computer.

In Step 402, after the computer is powered on, BIOS of the computer detects peripheral devices. The wireless communication data card is also powered on, and reports to the BIOS via a connected USB interface or other interfaces that connected devices are a CD-ROM port and a Modem port. Here, the communication between the wireless communication data card and the computer is controlled by the OS1 of the wireless communication data card. In addition, it is indicated that a CD-ROM device and a Modem are connected via the USB port. At this time, an OS3 of the computer is not started.

In Step 403, after the BIOS of the computer determines that the connected device is a CD-ROM device, a startup file in the CD-ROM device is searched according to a starting sequence set in the BIOS. Then, the OS1 of the wireless communication data card unpacks and encapsulates the virtual CD-ROM image file in the wireless communication data card, and notifies the BIOS that the CD-ROM device has the startup file. Afterward, the computer loads the OS2 in the virtual CD-ROM image file, and is booted by the OS2. Here, the OS1 transmits the OS2 and other image files to the computer through an SCSI protocol.

In Step 404, the computer is controlled by the OS2. The OS2 loads a driver of the wireless communication data card, and configures a Modem of the wireless communication data card to connect to the Internet, i.e. to communicate with the Internet via the Modem port, so as to connect to a remote virus database server. Here, the OS2 communicates with the OS1 in the wireless communication data card through an Attention (AT) command, controls the network connection of the Modem of the wireless communication data card, and interacts with the OS1 through an extended AT command.

In Step 405, it is detected whether versions of the antivirus software and the virus database in the virtual CD-ROM image file in the wireless communication data card are the latest or not, for example, by determining whether versions of the antivirus software and the virus database in the virtual CD-ROM image file in the wireless communication data card are consistent with versions in the virus database server or not, and if not, Step 406 is performed; otherwise, Step 408 is performed.

In Step 406, the validity of a user account is verified via a wireless network, and the antivirus software and the virus database are upgraded. If the verification is passed, Step 407 is performed; otherwise, Step 411 is performed to end the boot upgrade.

In Step 407, the OS2 sends a command for updating the antivirus software and the virus database to the OS1 of the wireless communication data card through an extended AT command, and the OS1 updates the antivirus software and the virus database in the virtual CD-ROM image file in the wireless communication data card according to data obtained from the remote virus database server. Here, only the OS1 of the wireless communication data card can perform a write operation on the virtual CD-ROM image file in the wireless communication data card, which prevents the antivirus software and the OS2 of the wireless communication data card from being damaged by computer viruses, thereby ensuring the system security and improving the antivirus capability.

In Step 408, the antivirus software and the virus database are loaded into the OS2 that controls the computer, and the antivirus software is started to perform a virus removal operation.

In Step 409, after the virus removal operation is completed, it is indicated to disconnect the wireless communication data card from the computer and restart the computer.

In Step 410, the computer is restarted, and the BIOS normally boots a hard disk of the computer.

In an embodiment of the present invention, in Step 406, even if the verification fails, Step 408 may still be directly performed to carry out virus removal.

In an embodiment of the present invention, in the verification step, the remote virus database server determines whether the antivirus software of the terminal has a valid identifier (ID), and if yes, it is indicated that the antivirus software may be upgraded and updated; otherwise, the antivirus software cannot be upgraded and updated.

Through this embodiment, the computer may be connected to the remote virus database server via the wireless communication data card, and connected to the outside via various network communication devices, so as to realize the update of the virus database when the computer is booted. As such, the update of the antivirus software and the virus database of the computer becomes more secure, and can be achieved more flexibly.

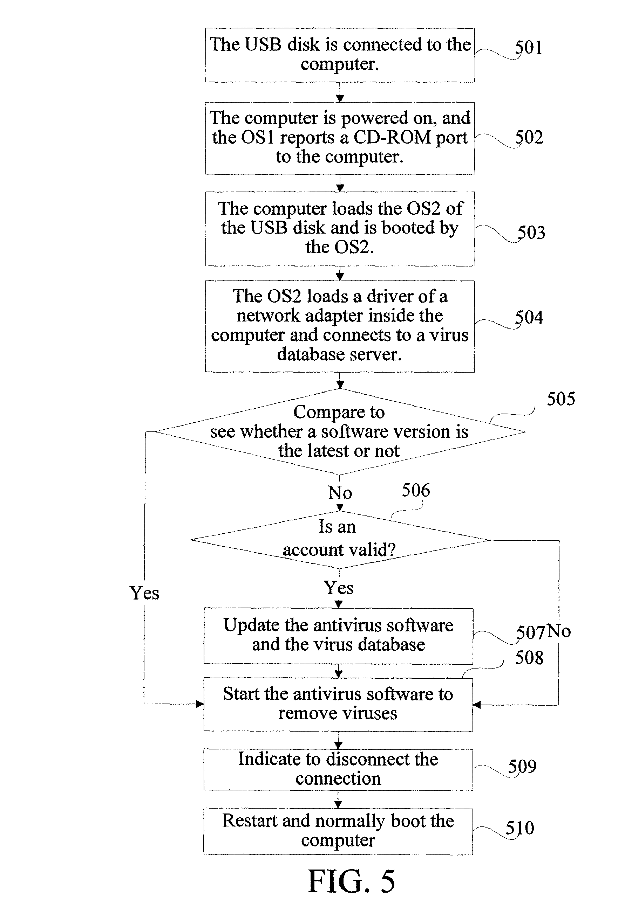

FIG. 5 is a flow chart of a method for upgrading antivirus software when a computer is booted by a terminal according to a fifth embodiment of the present invention. The terminal is a USB disk. An embedded system of the USB disk is an OS1, which is responsible for communication between the USB disk and the computer. The USB disk further has a virtual CD-ROM image file (for example, an ISO, BIN, or NRG image file). The file contains an OS2 file, antivirus software, and a virus database. The OS2 is, for example, a DOS, Win-CE, or Linux system operable to boot the antivirus software.

In Step 501, the USB disk is connected to the computer.

In Step 502, after the computer is powered on, BIOS of the computer detects peripheral devices. The USB disk is also powered on, and reports to the BIOS via a connected USB interface that a connected device is a CD-ROM port. Here, the communication between the USB disk and the computer is controlled by the OS1 of the USB disk. The communication data package is encapsulated in a USB protocol. SCSI protocol data is written into the communication data package. In addition, it is indicated that a CD-ROM device is connected via the USB port.

In an embodiment of the present invention, if the BIOS of the computer can be booted by the USB disk, the USB disk may also report a USB port.

In Step 503, after the BIOS of the computer determines that the connected device is a CD-ROM device, a startup file in the CD-ROM device is searched according to a starting sequence set in the BIOS. Then, the OS1 of the USB disk unpacks and encapsulates the virtual CD-ROM image file in the USB disk, and notifies the BIOS that the CD-ROM device has the startup file. Afterward, the computer loads the OS2 in the virtual CD-ROM image file, and is booted by the OS2.

In Step 504, the computer is controlled by the OS2. If the user sets a network adapter inside the computer as a network communication device, the OS2 identifies the setting of the user, preferentially loads a driver of the network adapter inside the computer, and configures the network driver to connect to the Internet through wired connections, so as to connect to a remote virus database server.

The terminal in this embodiment may also be the terminal with a network communication function as described in the second or fourth embodiment of the present invention. The user may also set the terminal as the network communication device, and at this time, the OS2 may preferentially load a driver of a communication unit of the terminal according to the setting of the user.

In Step 505, the OS2 of the computer detects whether versions of the antivirus software and the virus database in the virtual CD-ROM image file in the USB disk are consistent with versions in the virus database server or not, and if not, Step 506 is performed; otherwise, Step 508 is performed.

In Step 506, the validity of a user account is verified via a wired network of the computer, and the antivirus software and the virus database are upgraded. If the verification is passed, Step 507 is performed; otherwise, Step 508 is performed.

In Step 507, the OS2 sends a command for updating the antivirus software and the virus database to the OS1 of the USB disk through an extended SCSI command, and the OS1 updates the antivirus software and the virus database in the virtual CD-ROM image file in the USB disk according to data obtained from the remote virus database server. Here, only the OS1 of the USB disk can perform a write operation on the virtual CD-ROM image file in the USB disk, which prevents the antivirus software and the OS2 of the USB disk from being damaged by computer viruses, thereby ensuring the system security and improving the antivirus capability. The extended SCSI command includes a command for updating the antivirus software and the virus database, a command for comparing antivirus software versions, a command for controlling the connection of the USB disk, and the like.

In Step 508, the antivirus software and the virus database are loaded into the OS2 that controls the computer, and the antivirus software is started to perform a virus removal operation.

In Step 509, after the virus removal operation is completed, it is indicated to disconnect the USB disk from the computer and restart the computer.

In Step 510, the computer is restarted, and the BIOS normally boots a hard disk of the computer.

Through this embodiment, the computer may be connected to the remote virus database server via a network communication device thereof or a network communication device of the terminal, so as to securely update the antivirus software and the virus database.

Through the above description of the embodiments, it is apparent to those skilled in the art that some embodiments of the present invention may be accomplished by software on a necessary universal hardware platform, and definitely may also be accomplished by hardware. Therefore, the technical solutions of the present invention can be embodied in the form of a software product. The software product is stored in a storage medium, and contains several instructions to instruct a computer device to perform the method as described in the embodiments of the present invention.

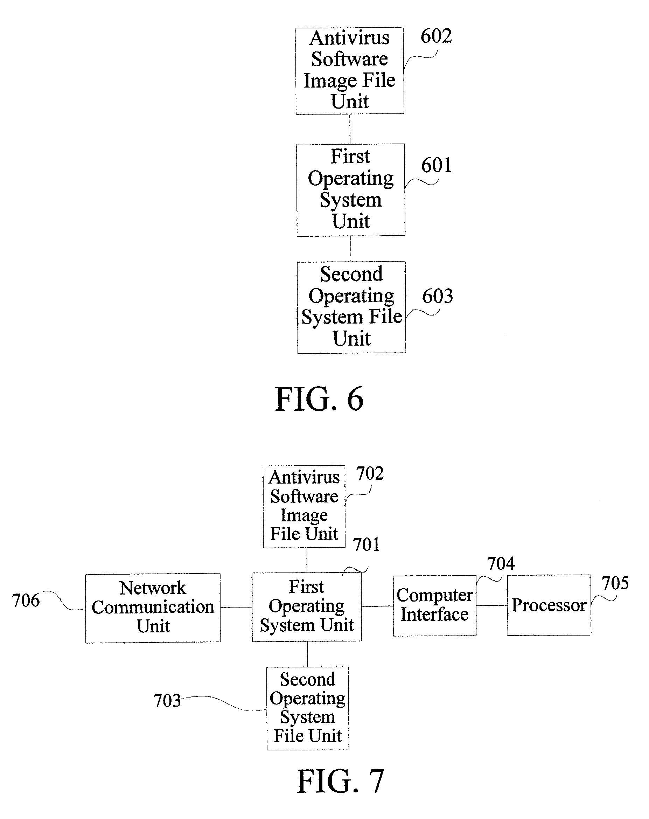

FIG. 6 is a schematic structural view of a terminal capable of upgrading antivirus software when booting. The terminal includes a first operating system unit 601 (corresponding to the OS1 in the above embodiments), an antivirus software image file unit 602, and a second operating system file unit 603 (corresponding to the OS2 in the above embodiments).

The first operating system unit 601 is connected to an external computer, and reports a first device port of the terminal to the computer when the computer connected to the terminal is started. The first device port is, for example, a CD-ROM port or a USB port.

The antivirus software image file unit 602 is operable to store antivirus software.

The second operating system file unit 603 is operable to store a second operating system file, so that the computer runs an OS2 via the first device port. The OS2 is operable to enable the computer to load a driver of a network communication device of the computer or the terminal, and connect to a remote virus database server via the network communication device to download an update file of the antivirus software stored in the antivirus software image file unit 602.

The first operating system unit 601 is further operable to use the update file of the antivirus software to update the antivirus software, and the first operating system unit 601 may perform a write operation on the antivirus software image file unit 602.

By using the terminal with antivirus software provided by this embodiment, the computer may be connected to the remote virus database server via a network communication device thereof or a network communication device of the terminal when being booted, so as to securely update the antivirus software and the virus database. In an embodiment of the present invention, the terminal may further include a driver image file unit, operable to store the driver of the network communication device, so that the second operating system file unit 603 loads the driver of the network communication device when driving the computer to be started.

In an embodiment of the present invention, the terminal may further include a network communication unit connected to the first operating system unit 601. The terminal may be connected to a network via the network communication unit.

In an embodiment of the present invention, the computer may further run the OS2 in the second operating system file unit 603. When the antivirus software fails to be updated, or after the antivirus software is updated by the first operating system unit, the antivirus software is loaded to scan and remove viruses in the computer.

FIG. 7 is a schematic structural view of a system capable of upgrading antivirus software when booting. The system includes a terminal and a computer. The terminal includes a first operating system unit 701 (OS1), an antivirus software image file unit 702, and a second operating system file unit 703 (OS2). The computer includes a processor 705 and a computer interface 704.

In an embodiment of the present invention, the system may further include a network communication unit 706.

The terminal is as described in the embodiment shown by FIG. 6. The OS1 reports to the processor 705 of the computer a port of the terminal for starting the computer. For example, the terminal is a USB-Modem, a wireless communication data card, or a USB disk, and the reported port is a CD-ROM port or a USB port. The first operating system unit 701 transmits the second operating system file unit 703 to the processor 705 of the computer via the computer interface 704, and the processor 705 of the computer is started according to the second operating system file unit 703 of the terminal.

The processor 705 of the computer loads a driver image file to the computer via the second operating system file unit 703 (the driver image file may be stored in the driver image file unit of the terminal, or stored in a driver image file unit of the computer), so that the processor 705 of the computer can be connected to a virus database server via the network communication unit 706. The network communication unit 706 may be located in the terminal, and the computer communicates with a network via the network communication unit 706 of the terminal. Alternatively, the network communication unit 706 is located in the computer, and the computer communicates with a network via the network communication unit 706.

The processor 705 of the computer is controlled by the OS2 to compare a version of the antivirus software in the antivirus software image file unit 702 of the terminal with a software version of the virus database server, so as to determine whether versions of the antivirus software and the virus database stored in the terminal are the latest or not. If yes, the processor 705 of the computer loads the antivirus software image file unit 702 of the terminal to scan and remove viruses in the computer; otherwise, the processor 705 of the computer notifies the first operating system unit 701 to update the antivirus software image file unit 702, and the processor 705 of the computer loads the antivirus software image file unit 702 of the terminal to use the updated antivirus software and virus database to scan and remove viruses in the computer.

The beneficial effects of the present invention lie in that, through the method of the present invention, when the computer is booted by the terminal, the network communication device can be loaded for updating the antivirus software, so that the terminal downloads the latest antivirus software, thereby ensuring the system security and antivirus efficiency. Through this step, the use of the antivirus software by invalid users is limited, thus preventing software piracy. Through the control over the write operation of the terminal, the reliability of the antivirus software of the terminal is ensured, and viruses may not be written into the terminal from the computer. Through the format of the virtual CD-ROM, the second operating system, the antivirus software, and the driver of the network communication device can be stored in the terminal more securely, and can be easily loaded into the computer when the computer is booted. By using the terminal of the present invention, the network connection of the computer can be achieved through a network adapter when the computer is booted by the terminal, thus updating the antivirus software. With the system of the present invention, the antivirus software may be upgraded and updated when the computer is booted, so as to ensure the reliability of the antivirus software and improve the security of the computer. Moreover, the cost is low, as the existing computer and terminal only need to be modified slightly.

The objectives, technical solutions, and beneficial effects of the present invention have been described in further detail through the above specific embodiments. It should be understood that the above descriptions are merely preferred embodiments of the present invention, but not intended to limit the scope of the present invention. Any modification, equivalent replacement, or improvement made without departing from the principle of the present invention should fall within the scope of the present invention.

## Claims

1. A method for upgrading antivirus software, comprising:
reporting, by a first operating system connected to a terminal, a first device port of the terminal to a computer when the computer is started, wherein a second operating system is stored in a storage space corresponding to the first device port of the terminal;
running, by the computer, the second operating system via the first device port;
loading, by the second operating system, a driver of a network communication device of the computer or the terminal, and downloading, by the second operating system, an update file of the antivirus software from a remote virus database server via the network communication device,; and
using, by the first operating system of the terminal, the update file of the antivirus software to update the antivirus software.

2. The method according to claim 1, wherein:
loading, by the second operating system, the antivirus software of the terminal to scan and remove viruses in the computer after the antivirus software is updated.

3. The method according to claim 1 or 2, before the first operation system updating the antivirus software, the method further comprises ;
determining, by the first operation system or the second operation system, whether the version of the antivirus software is inconsistent with an antivirus software version of the remote virus database server, if so, loading a driver of a network communication device of the computer or the terminal, downloading an update file of the antivirus software from the remote virus database server via the network communication device;
otherwise, loading the antivirus software of the terminal to scan and remove viruses in the computer.

4. The method according to claim 3, wherein after determining the version of the antivirus software of the terminal, the method further comprises:
determining, by the remote virus database server, whether the antivirus software of the terminal has a valid identifier (ID) or not, and if yes, allowing the network communication device to connect to the remote virus database server; otherwise, ending the update process.

5. The method according to any of claims 1 to 4, wherein the second operating system loading the antivirus software of the terminal to scan and remove viruses in the computer after the antivirus software fails to be updated.

6. The method according to any of claims 1 to 5, wherein the second operating system loading a driver of a network communication device of the computer or the terminal according to a selection of a user.

7. The method according to claim 2, wherein after scanning and removing the viruses, the method further comprises: indicating a user to disconnect the terminal from the computer.

8. The method according to any of claims 1 to 7, wherein only the first operating system of the terminal is capable of performing a write operation on the terminal.

9. The method according to any of claims 1 to 8, wherein the second operating system, the antivirus software, and the driver of the network communication device are stored in the terminal in a virtual compact disk-read only memory (CD-ROM) format.

10. A terminal with antivirus software, comprising:
a first operating system unit, operable to report a first device port of the terminal to a computer connected to the terminal when the computer is started;
an antivirus software image file unit, operable to store antivirus software; and
a second operating system file unit, operable to store a second operating system file for the computer to run a second operating system via the first device port;
wherein the second operating system is operable to load a driver of a network communication device of the computer or the terminal, and connect to a remote virus database server via the network communication device to download an update file of the antivirus software stored in the antivirus software image file unit; and
wherein the first operating system unit is further operable to use the update file of the antivirus software to update the antivirus software.

11. The terminal according to claim 10, wherein the second operating system is further operable to enable the computer to load the antivirus software to scan and remove viruses in the computer after the antivirus software fails to be updated or the antivirus software is updated by the first operating system unit.

12. The terminal according to claim 10 or 11, further comprising: a driver image file unit, operable to store the driver of the network communication device.

13. The terminal according to claim 12, wherein only the first operating system unit is capable of performing a write operation on the terminal.

14. A system for upgrading antivirus software, comprising:
a terminal and a computer,
wherein the terminal further comprises: a first operating system unit, operable to report a first device port of the terminal to a computer connected to the terminal when the computer is started;
an antivirus software image file unit, operable to store antivirus software; and
a second operating system file unit, operable to store a second operating system file for the computer to run a second operating system via the first device port, wherein the second operating system is operable to load a driver of a network communication device of the computer or the terminal, and connect to a remote virus database server via the network communication device to download an update file of the antivirus software stored in the antivirus software image file unit,
wherein the first operating system unit is further operable to use the update file of the antivirus software to update the antivirus software; and
the computer further comprises: an interface and a processor;
the computer communicates with the terminal via the interface, and the processor is operable to process data received and sent via the interface and run the second operating system.

15. The system according to claim 14, wherein the second operating system is further operable to be used by the computer to load the antivirus software in the antivirus software image file unit so as to scan and remove viruses in the computer.

## Amended claims

### Amended claims in accordance with Rule 137(2) EPC.

**1.** A method for upgrading antivirus software, comprising:
reporting, by a first operating system connected to a terminal, a first device port of the terminal to a computer when the computer is started, wherein a second operating system is stored in a storage space corresponding to the first device port of the terminal;
running, by the computer, the second operating system via the first device port;
loading, by the second operating system, a driver of a network communication device of the computer or the terminal, and downloading, by the second operating system, an update file of the antivirus software from a remote virus database server via the network communication device; and
using, by the first operating system of the terminal, the update file of the antivirus software to update the antivirus software; wherein only the first operating system of the terminal is capable of performing a write operation on the terminal.

**2.** The method according to claim 1, wherein:
loading, by the second operating system, the antivirus software of the terminal to scan and remove viruses in the computer after the antivirus software is updated.

**3.** The method according to claim 1 or 2, before the first operation system updating the antivirus software, the method further comprises ;
determining, by the first operation system or the second operation system, whether the version of the antivirus software is inconsistent with an antivirus software version of the remote virus database server, if so, loading a driver of a network communication device of the computer or the terminal, downloading an update file of the antivirus software from the remote virus database server via the network communication device;
otherwise, loading the antivirus software of the terminal to scan and remove viruses in the computer.

**4.** The method according to claim 3, wherein after determining the version of the antivirus software of the terminal, the method further comprises:
determining, by the remote virus database server, whether the antivirus software of the terminal has a valid identifier (ID) or not, and if yes, allowing the network communication device to connect to the remote virus database server; otherwise, ending the update process.

**5.** The method according to any of claims 1 to 4, wherein the second operating system loading the antivirus software of the terminal to scan and remove viruses in the computer after the antivirus software fails to be updated.

**6.** The method according to any of claims 1 to 5, wherein the second operating system loading a driver of a network communication device of the computer or the terminal according to a selection of a user.

**7.** The method according to claim 2, wherein after scanning and removing the viruses, the method further comprises: indicating a user to disconnect the terminal from the computer.

**8.** The method according to any of claims 1 to 7, wherein the second operating system, the antivirus software, and the driver of the network communication device are stored in the terminal in a virtual compact disk-read only memory (CD-ROM) format.

**9.** A terminal with antivirus software, comprising:
a first operating system unit, operable to report a first device port of the terminal to a computer connected to the terminal when the computer is started;
an antivirus software image file unit, operable to store antivirus software; and
a second operating system file unit, operable to store a second operating system file for the computer to run a second operating system via the first device port;
wherein the second operating system is operable to load a driver of a network communication device of the computer or the terminal, and connect to a remote virus database server via the network communication device to download an update file of the antivirus software stored in the antivirus software image file unit; and
wherein the first operating system unit is further operable to use the update file of the antivirus software to update the antivirus software; wherein only the first operating system unit is capable of performing a write operation on the terminal.

**10.** The terminal according to claim 9, wherein the second operating system is further operable to enable the computer to load the antivirus software to scan and remove viruses in the computer after the antivirus software fails to be updated or the antivirus software is updated by the first operating system unit.

**11.** The terminal according to claim 9 or 10, further comprising: a driver image file unit, operable to store the driver of the network communication device.

**12.** A system for upgrading antivirus software, comprising:
a terminal and a computer,
wherein the terminal further comprises: a first operating system unit, operable to report a first device port of the terminal to a computer connected to the terminal when the computer is started;
an antivirus software image file unit, operable to store antivirus software; and
a second operating system file unit, operable to store a second operating system file for the computer to run a second operating system via the first device port, wherein the second operating system is operable to load a driver of a network communication device of the computer or the terminal, and connect to a remote virus database server via the network communication device to download an update file of the antivirus software stored in the antivirus software image file unit,
wherein the first operating system unit is further operable to use the update file of the antivirus software to update the antivirus software and only the first operating system unit is capable of performing a write operation on the terminal; and
the computer further comprises: an interface and a processor;
the computer communicates with the terminal via the interface, and the processor is operable to process data received and sent via the interface and run the second operating system.

**13.** The system according to claim 12, wherein the second operating system is further operable to be used by the computer to load the antivirus software in the antivirus software image file unit so as to scan and remove viruses in the computer.
